# EUROPEAN PATENT APPLICATION

(11) **EP 4 682 875 A1**
(43) Date of publication of application: **21.01.2026**
(21) Application number: 23940809.9
(22) Date of filing: 08.06.2023
(51) Int. Cl.: G10L 21/003, G10L 25/03, G10L 25/93, G10L 25/60, G06F 3/16

(54) **DISPLAY DEVICE AND OPERATION METHOD THEREFOR**

(71) Applicant: LG Electronics Inc., Yeongdeungpo-gu Seoul 07336 (KR)
(72) Inventor: YOO, Yong Su, Seoul 06772 (KR)
(74) Representative: Vossius & Partner Patentanwälte Rechtsanwälte mbB
(86) International application number: PCT/KR2023/007847
(87) International publication number: WO 2024/253221

(57) **Abstract**

A display device and an operation method therefor are disclosed. A display device according to at least one of various embodiments of the present disclosure comprises: an audio decoder for decoding audio data of content; and a processor for controlling the audio decoder, wherein the processor can detect a change in the quality of the audio data decoded by the audio decoder and control an application time point of the quality-changed audio data.

## Description

### [Technical Field]

The present disclosure relates to a display device and an operation method thereof.

### [Background Art]

The functionality of recent terminals has become increasingly diverse. Examples include data and voice communication, photography and video recording via cameras, voice recording, music playback via speaker systems, and display output of images and videos.

Some terminals have added electronic game play capabilities or multimedia player functionality.

As these terminals diversify, they are increasingly being implemented as multimedia players, equipped with complex functions such as photo and video capture, music and video playback, gaming, and broadcast reception.

### [Disclosure]

### [Technical Problem]

The present disclosure provides a display device and an operating method thereof that applies QoS (Quality of Service) to changes in a data reception environment and operates to minimize changes in a user's perceived quality by controlling the output of audio frames.

### [Technical Solution]

A display device according to at least one of the various embodiments of the present disclosure comprises an audio decoder configured to decode audio data of content; and a processor configured to control the audio decoder, wherein the processor is configured to detect a change in the quality of the audio data decoded by the audio decoder, and control a timing of application of a quality-changed audio data.

According to at least one of the various embodiments of the present disclosure, wherein the processor is configured to control the timing of application of the quality-changed audio data using a sound quality control factor.

According to at least one of the various embodiments of the present disclosure, wherein the processor is configured to control the timing of application of the quality-changed audio data in audio frame units.

According to at least one of the various embodiments of the present disclosure, wherein the processor is configured to control the timing of application of the quality-changed audio data in units of scene changes of the content.

According to at least one of the various embodiments of the present disclosure, wherein the sound quality control factor includes at least one of sampling rate information, data bit number information, and audio channel number information about audio data.

According to at least one of the various embodiments of the present disclosure, wherein the processor is configured to control the timing of application of the quality-changed audio data to be pulled forward or delayed using the sound quality control factor.

According to at least one of the various embodiments of the present disclosure, wherein the processor is configured to detect a silent section in an audio frame to be played before or after the quality-changed audio data, and control the quality of the audio data to be changed in the detected silent section using the sound quality control factor.

According to at least one of the various embodiments of the present disclosure, wherein the processor is configured to detect a section in which a set volume level is less than or equal to a threshold in an audio frame to be played before or after the quality-changed audio data, and control the quality of the audio data in the detected section in which the set volume level is less than or equal to the threshold level using the sound quality control factor.

According to at least one of the various embodiments of the present disclosure, wherein the processor is configured to control the quality of the audio data to be changed by selecting an arbitrary audio frame if the silent section is not detected within the number of audio frames determined by considering a buffer size.

According to at least one of the various embodiments of the present disclosure, wherein the processor is configured to control the timing of application of the quality-changed audio data by controlling audio data corresponding to the Least Significant Bits (LSB) of the audio data using the data bit number information.

According to at least one of the various embodiments of the present disclosure, wherein the processor is configured to control the timing of application of the quality-changed audio data by controlling an additional audio channel other than a basic audio channel of the audio data using the audio channel number information.

According to at least one of the various embodiments of the present disclosure, wherein the processor is configured to control the timing of application of the quality-changed audio data by resampling the number of audio samples to be output per second using the sampling rate information.

An operation method of a display device according to at least one embodiment of the various embodiments of the present disclosure, comprises decoding content; detecting audio frames having audio quality different from audio quality of previous frames among audio frames within the decoded content; and controlling a timing of application of quality-changed audio data according to the detected audio frame.

### [Advantageous Effects]

According to at least one of the various embodiments of the present disclosure, there is an effect that changes in the user's perceived quality can be seamlessly or minimally applied even when Quality of Service (QoS) is applied to changes in the data reception environment.

According to at least one of the various embodiments of the present disclosure, there is an effect that can improve the user's satisfaction with using the display device.

### [Description of Drawings]

FIG. 1 is a block diagram showing a configuration of a display device according to an embodiment of the present disclosure.
FIG. 2 is a block diagram of a remote control device according to an embodiment of the present disclosure.
FIG. 3 shows an actual configuration example of a remote control device according to an embodiment of the present disclosure.
FIG. 4 shows an example of using a remote control device according to an embodiment of the present disclosure.
Fig. 5 is a diagram illustrating a horizontal mode and a vertical mode of a stand-type display device according to an embodiment of the present disclosure.
FIG. 6 is a diagram illustrating an example of a method for processing audio data by a display device according to changes in data reception conditions.
FIG. 7 is a diagram illustrating a configuration of a display device that processes audio data according to changes in data reception conditions, according to an embodiment of the present disclosure.
FIGS. 8 to 10 are diagrams illustrating the operation of a display device according to an embodiment of the present disclosure.
FIGS. 11 to 13 are diagrams illustrating the operation of a display device according to another embodiment of the present disclosure.
FIG. 14 is a diagram illustrating sound quality control factor control according to an embodiment of the present disclosure.
FIG. 15 is a flowchart illustrating an operating method of a display device according to an embodiment of the present disclosure.

### [Best Mode]

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

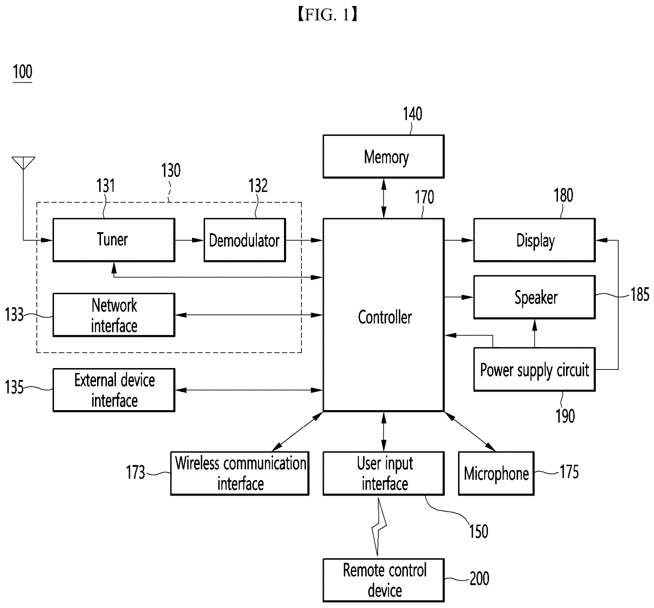

FIG. 1 is a block diagram showing a configuration of a display device according to an embodiment of the present disclosure.

Referring to FIG. 1, a display device 100 may include a broadcast receiver 130, an external device interface 135, a memory 140, a user input interface 150, a controller 170, a wireless communication interface 173, a display 180, a speaker 185, and a power supply circuit 190.

The broadcast receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The network interface 133 may provide an interface for connecting the display device 100 to a wired/wireless network including an Internet network. The network interface 133 may transmit or receive data to or from other users or other electronic devices through a connected network or another network linked to the connected network.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a contents provider or a network operator. That is, the network interface 133 may receive content such as movies, advertisements, games, VOD, and broadcast signals and information related thereto provided from a contents provider or a network provider through a network.

In addition, the network interface 133 may receive update information and update files of firmware provided by the network operator, and may transmit data to an Internet or contents provider or a network operator.

The network interface 133 may select and receive a desired application from among applications that are open to the public through a network.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

In addition, a part of content data stored in the display device 100 may be transmitted to a selected user among a selected user or a selected electronic device among other users or other electronic devices registered in advance in the display device 100.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal.

Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100. Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The voice acquisition interface 175 can acquire audio. The voice acquisition interface 175 can include at least one microphone (not shown) and can acquire audio around the display device 100 through the microphone (not shown).

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play the same.

For example, the display device 100 may be divided into an image processing device, such as a set-top box, for receiving broadcast signals or content according to various network services, and a content playback device that plays content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 and the speaker 185.

The audio output interface 185 receives a signal processed by the controller 170 and outputs it as voice.

The power supply circuit 190 supplies the corresponding power to the entire display device 100. In particular, power can be supplied to the controller 170 that can be implemented in the form of a system on chip (SOC), the display 180 for displaying images, and the audio output interface 185 for audio output.

Specifically, the power supply circuit 190 can be equipped with a converter that converts AC power into DC power and a dc/dc converter that converts the level of the DC power.

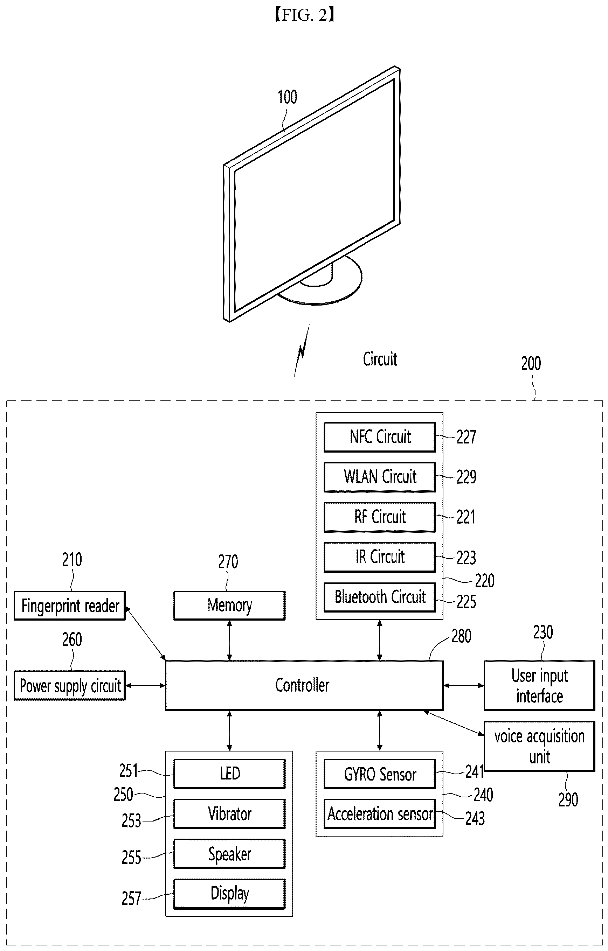

Next, a remote control device according to an embodiment of the present disclosure will be described with reference to FIGS. 2 to 3.

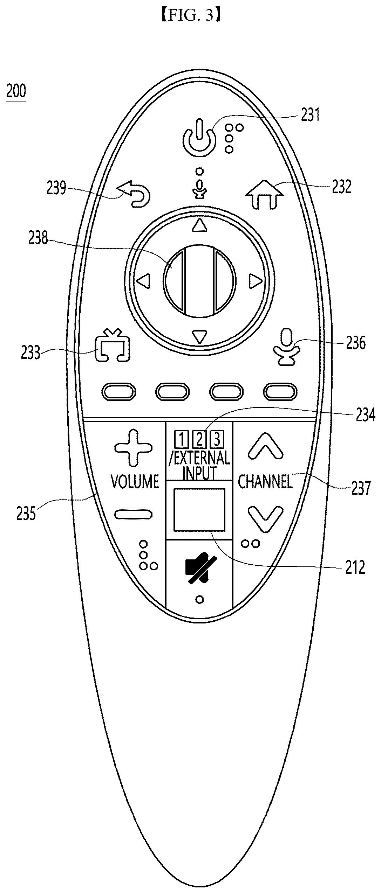

FIG. 2 is a block diagram of a remote control device according to an embodiment of the present disclosure, and FIG. 3 shows an actual configuration example of a remote control device 200 according to an embodiment of the present disclosure.

First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a voice acquisition unit 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard. In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation. The power button 231 may be a button for turning on/off the power of the display device 100. The home button 232 may be a button for moving to the home screen of the display device 100. The live button 233 may be a button for displaying a real-time broadcast program. The external input button 234 may be a button for receiving an external input connected to the display device 100. The volume control button 235 may be a button for adjusting the level of the volume output by the display device 100. The voice recognition button 236 may be a button for receiving a user's voice and recognizing the received voice. The channel change button 237 may be a button for receiving a broadcast signal of a specific broadcast channel. The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure.

The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100. The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication circuit 220.

In addition, the power supply circuit 260 may supply power to the remote control device 200, and stop power supply when the remote control device 200 has not moved for a predetermined time to reduce power consumption. The power supply circuit 260 may restart power supply when a predetermined key provided in the remote control device 200 is operated.

The memory 270 may store various types of programs and application data required for control or operation of the remote control device 200. When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 230 or a signal corresponding to the movement of the remote control device 200 sensed by the sensor 240 through the wireless communication circuit 220.

Also, the voice acquisition unit 290 of the remote control device 200 may obtain a speech.

The voice acquisition unit 290 may include at least one microphone 291, and may acquire voice through the microphone 291.

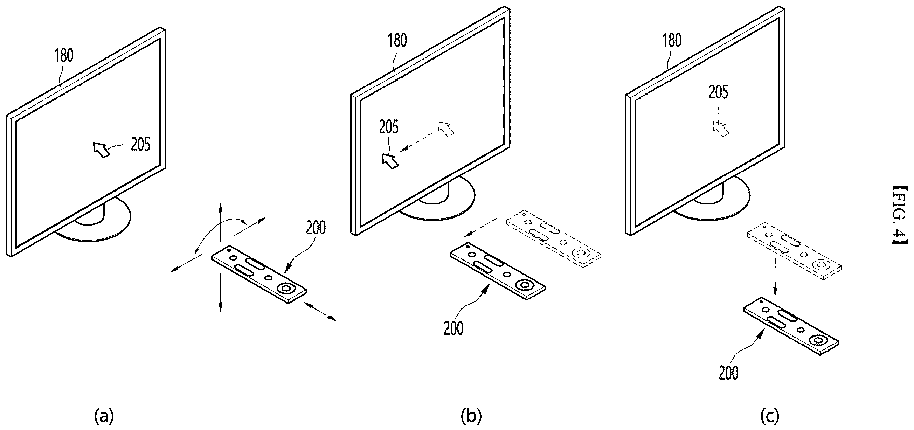

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.

Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4, it is illustrated that a user moves the remote control device 200 away from the display 180 while pressing a specific button in the remote control device 200. Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205. For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

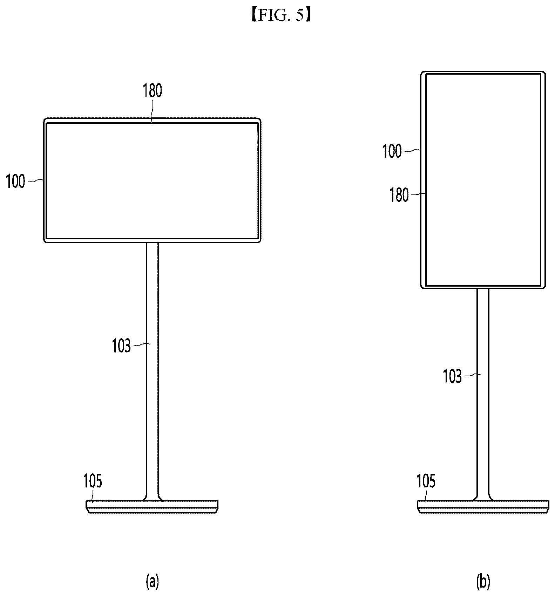

FIG. 5 (a) and FIG. 5 (b) are drawings for explaining a horizontal mode and a vertical mode of the stand-type display device according to the embodiment of the present disclosure.

Referring to FIG. 5 (a) and FIG. 5 (b), a stand-type display device 100 is illustrated.

A shaft 103 and a stand base 105 may be connected to the display device 100.

The shaft 103 may connect the display device 100 and the stand base 105. The shaft 103 may be extended vertically.

The lower end of the shaft 103 may be connected to the edge of the stand base 105.

The lower end of the shaft 103 may be rotatably connected to a circumference of the stand base 105.

The display device 100 and the shaft 103 can rotate around a vertical axis with respect to the stand base 105.

The upper portion of the shaft 103 can be connected to the rear of the display device 100.

The stand base 105 can serve to support the display device 100.

The display device 100 can be configured to include the shaft 103 and the stand base 105.

The display device 100 can rotate around a point where the upper portion of the shaft 103 and the rear of the display 180 meet.

FIG. 5 (a) may indicate that the display 180 operates in a horizontal mode in which the horizontal length is greater than the vertical length, and FIG. 5 (b) may indicate that the display 180 operates in a vertical mode in which the vertical length is greater than the horizontal length.

The user may move the stand-type display device 100. That is, unlike fixed devices, the stand-type display device 100 has improved mobility, so the user is not restricted by the placement location.

Next, a method for adaptively processing images based on data reception conditions in a display device 100 is described. Here, "adaptive processing" refers to seamlessly processing changes in the image displayed to the user, i.e., output, to minimize or eliminate user viewing inconvenience.

Various embodiments of a method for processing audio in the display device 100 are described below, but are not necessarily limited thereto.

While advancements in multimedia technology have enabled content to be enjoyed anytime, anywhere, the amount of data required for such content is steadily increasing. Consequently, the display device 100, which requires high performance for such processing, may experience difficulties in smoothly receiving data related to the content, resulting in situations where it cannot provide the user with uninterrupted audio and video.

To solve these problems, QoS (Quality of Service) technology has been introduced. QoS technology is a technology that adaptively adjusts the video/audio quality level expressed by the display device 100 according to the amount of data reception available in the current environment, and also adaptively adjusts the amount of data required by the display device 100. Therefore, the display device 100 can process video/audio without video/audio interruption due to insufficient video/audio data even if the video/audio quality level is degraded in a poor data reception environment. Examples of such QoS technology include adaptive bitrate streaming used in network-based content such as OTT (Over the top) or VoD (Video on Demand), and scalable HEVC (High Efficiency Video Coding) used in ATSC 3.0 broadcasting.

Most QoS technologies support seamless switching, which prevents video/audio transients/breakups when changing video/audio quality levels during content playback. However, the change in content quality level itself can be noticed by the user, which can cause unnaturalness. For example, when a user watches an Internet video in a public place, the video quality deteriorates, such as the video becoming blurry, or the audio quality deteriorates, such as the audio being stretched or interrupted, depending on the network conditions. In the case of adaptive bitrate streaming, even under good network conditions, low-quality video/audio content is mainly provided at the beginning of stream playback due to its operating principle, and then improves. However, this may be perceived as a deterioration in service quality by users who are already accustomed to high-quality video/audio due to the fierce competition among CPs (Content Providers).

The present disclosure describes a method for minimizing user inconvenience due to changes in audio quality (i.e., sound quality) provided for content to which such QoS technology is applied.

In this specification, "audio" may mean or imply voice, sound, etc.

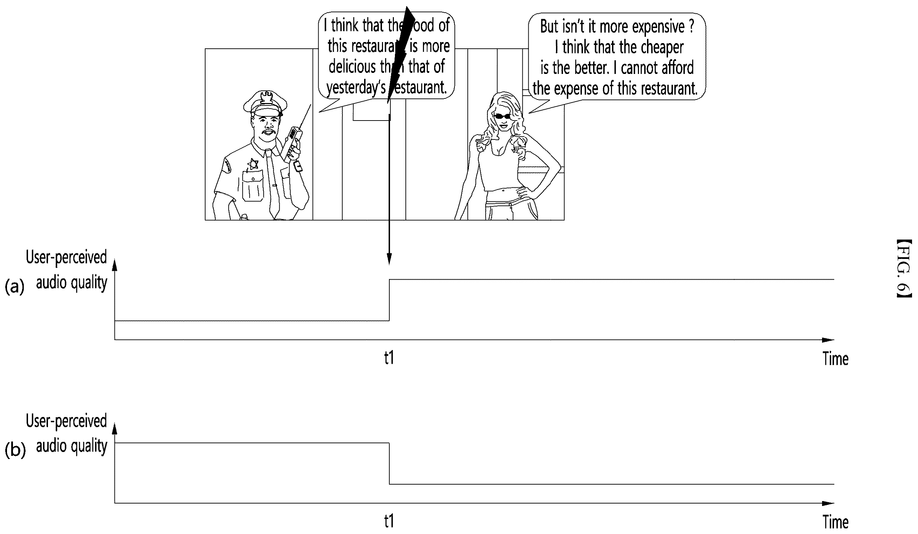

FIG. 6 illustrates an example of a method for processing audio data by the display device 100 according to changes in data reception conditions.

The display device 100 decodes the video and audio data of the input content, synchronizes them through a buffer, and sequentially outputs them to play the content.

For example, FIG. 6(a) and FIG. 6(b) illustrate cases where the data reception conditions change during content provision, respectively. FIG. 6(a) illustrates a case where an audio quality is improved due to changes in the data reception conditions, while FIG. 6(b) illustrates a case where an audio quality is deteriorated due to changes in the data reception conditions.

Therefore, the display device 100 can receive audio data of a quality that has changed compared to before from that point onwards.

Ultimately, the display device 100 must apply the changed quality audio data to the currently playing content.

The display device 100 may not separately consider audio quality changes due to changes in data reception conditions during the content provision process. In other words, the display device 100 can output the changed quality audio data as is without any separate control, even if the audio quality changes due to changes in data reception conditions during the content provision process.

However, if there is no separate control over the changed quality audio data as described above, users may not be able to hear important dialogue or audio at the desired quality or may experience discomfort due to the perceived change in audio quality while watching content. Recently, content that emphasizes sound as well as visual aesthetics is increasing, and such changes in audio quality can cause inconvenience to users and even reduce their satisfaction with products or services.

Accordingly, the present disclosure provides a method for seamlessly processing audio data, i.e., sound quality changes, so that the user can naturally accept them without easily perceiving them, even when data reception conditions change, on the display device 100.

In the present disclosure, the time at which the display device 100 processes audio data of content and the time at which the user listens to the content through an audio output device such as a speaker are different. The present disclosure ultimately seeks to process audio data so that the latter, that is, the user, cannot easily perceive changes in quality while using the content.

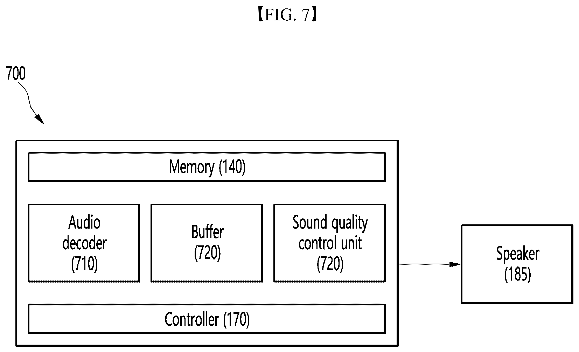

FIG. 7 is a diagram illustrating a configuration of the display device 100 that processes audio data according to changes in data reception conditions according to an embodiment of the present disclosure.

The display device 100 according to the present disclosure may include an audio decoder 710 that decodes audio data of the content, a speaker 185, and a processor 700 that controls the audio decoder 710.

According to the present disclosure, the processor 700 can detect a change in the quality of audio data decoded by the audio decoder 710. The processor 700 can control the timing of application of the quality-changed audio data.

The processor 700 can control the timing of application of the quality-changed audio data using a sound quality control factor. The sound quality control factor may include at least one of sampling rate information, data bit number information, and audio channel number information regarding the audio data. However, the present disclosure is not limited thereto.

The processor 700 can control the timing of application of the quality-changed audio data using data bit number information, but by controlling audio data corresponding to the least significant bits (LSBs) of the audio data.

The processor 700 may control the timing of application of quality-changed audio data by controlling an additional audio channel other than the basic audio channel of audio data using audio channel number information.

The processor 700 may control the timing of application of quality-changed audio data by resampling the number of audio samples to be output per second using sampling rate information.

At this time, if a first audio frame having a different quality from a previous frame (or to be output through the speaker 185 with a different audio quality) is detected among audio frames decoded by the audio decoder 710, the processor 700 may control a change in the sound quality of the first audio frame and at least one second audio frame adjacent to the first audio frame.

Meanwhile, the processor 700 can control sound quality changes through sound quality control factors preset for the first audio frame and the second audio frame.

Referring to FIG. 7, the display device 100 may include the processor 700 for audio processing and the speaker 185. In this case, the display device 100 of FIG. 7 may utilize at least one external speaker (not shown) that can be connected in addition to the speaker 185, as described below. However, this will be described later in the relevant section.

The processor 700 may include the audio decoder 710, a buffer 720, a sound quality control unit 730, and a controller 170.

The processor 700 may be implemented in the form of a System on Chip (SoC).

The processor 700 or the controller 170 within the processor may be or include a timing controller (Tcon).

The audio decoder 710 may decode audio data of the content.

The buffer 720 may temporarily store decoded audio data, i.e., audio frames. The buffer 720 may be implemented as a component of the audio decoder 710 rather than as a separate component. Furthermore, the number of buffers 720 need not be single; there may be multiple buffers.

The sound quality control unit 730 can control the sound quality control factor for at least one audio frame. The sound quality control unit 730 can adjust the sound quality for at least one audio frame.

The sound quality control unit 73 may include an audio mute control block 1410, 1420, a resampler 1430, etc.

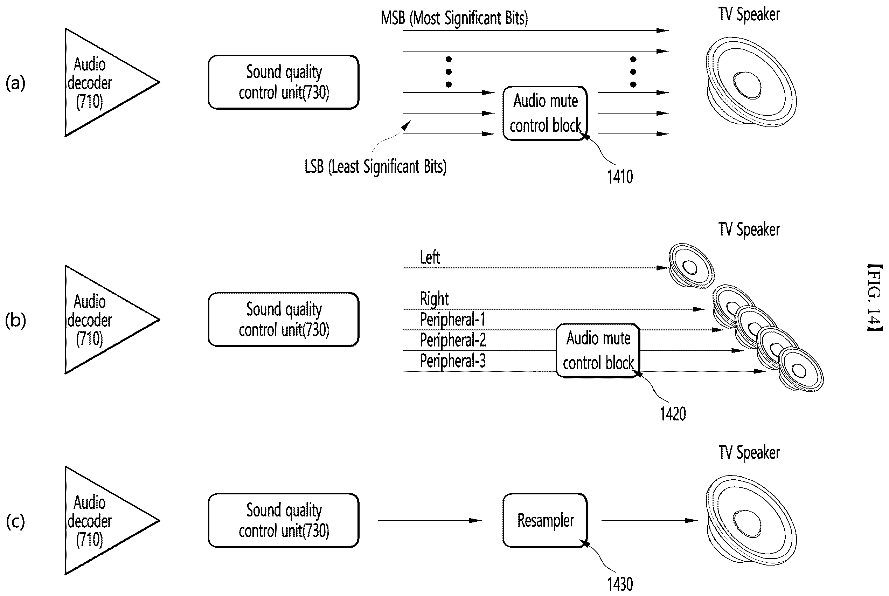

Referring to FIG. 14, the audio mute control block 1410, 1420 can mute a specific data bit or a specific audio channel in relation to the number of data bits or audio channels among the aforementioned sound quality control factors.

Referring to FIG. 14(a), the audio data can be divided into MSBs (Most Significant Bits), corresponding to upper bits, and LSBs (Least Significant Bits), corresponding to lower bits. The display device 100, which follows the QoS principle, can output only audio corresponding to the MSB when the data reception condition deteriorates (i.e., when low-quality audio data is obtained). Conversely, the display device 100 can output audio corresponding to both the MSB and the LSB when the data reception condition improves (i.e., when high-quality audio data is obtained).

Therefore, as illustrated in FIG. 14(a), the display device 100 includes an audio mute control block 1410 to apply muting to the LSB even when high-quality audio data is received, thereby converting high-quality audio data into low-quality audio data.

Referring to FIG. 14(b), audio can be output externally through multiple audio channels. The display device 100, which follows the QoS principle, can output audio only for the Left/Right channels, which are the primary audio channels, when data reception conditions deteriorate, for example. On the other hand, the display device 100 can output audio for the remaining additional channels as well as the aforementioned primary audio channels, i.e., the Left/Right channels, when data reception conditions improve, for example.

Therefore, as illustrated in FIG. 14(b), the display device 100 includes an audio mute control block 1420 to apply muting to the audio additional channels even when high-quality audio data is received, thereby converting high-quality audio data into low-quality audio data.

Referring to FIG. 14(c), the resampler 1430 can resample the number of audio samples to be output per second of audio data in relation to the sampling rate among the sound quality control factors described above. To this end, the resampler may have a clock lower than the sampling rate of the input signal.

The resampler 1430 can convert an original sampling rate of the audio to a target sampling rate. For example, the resampler can convert audio with an original sampling rate of 96 KHz into low-quality audio with a target sampling rate of 50 KHz. To convert the sampling rate of the original audio to the target sampling rate, the resampler can sample input data at a 50 KHz cycle. In other words, the resampler can select and output only 50 K audio samples out of 96 K audio samples received per second, thereby converting the output to audio data of a desired quality (e.g., low-quality). The opposite is also true.

The controller 740 can control the operation of each component for audio processing according to the present disclosure depending on the data reception status.

A more detailed description of the operation of the components of FIG. 7 will be described below.

Specifically, the processor 700 can control the timing of application of quality-changed audio data in units of audio frames. The processor 700 can control the timing of application of quality-changed audio data in units of scene change of the content.

The processor 700 can control the timing of application of quality-changed audio data to be advanced or delayed using a sound quality control factor.

The processor 700 can detect a silent section in an audio frame to be played before or after the quality-changed audio data, and control the quality of the audio data to be changed in the detected silent section using a sound quality control factor.

The processor 700 can detect a section in which a set volume level is less than or equal to a threshold in an audio frame to be played before or after the quality-changed audio data, and control the quality of the audio data to be changed in the detected section in which the set volume level is less than or equal to the threshold using the sound quality control factor.

The processor 700 can control the quality of audio data to be changed by selecting an arbitrary audio frame when the silent section is not detected within the number of audio frames determined by considering the buffer size.

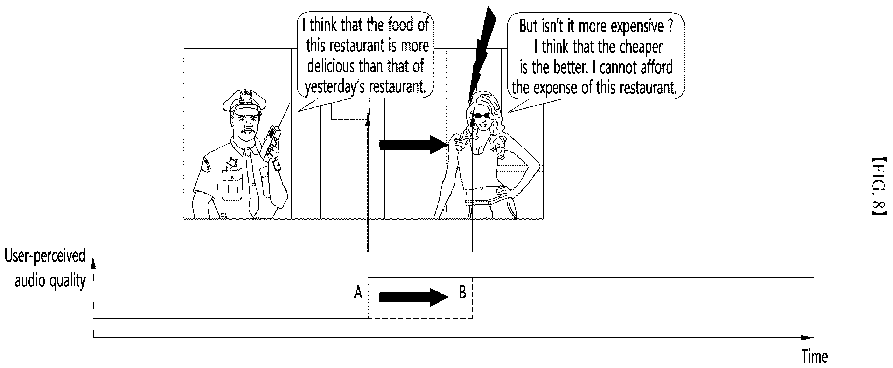

FIGS. 8 to 10 are diagrams illustrating the operation of the display device 100 according to an embodiment of the present disclosure.

FIGS. 8 to 10 disclose a content processing method according to the present disclosure, for example, when a data reception conditions improve after a specific point in time.

Referring to FIG. 8, the display device 100 may control the timing of application so that the changed audio quality is applied at an arbitrary section by delaying the timing of application, rather than at the section (A of FIG. 8) where the changed audio quality should originally be applied, based on a user's perception of the audio quality.

Here, the arbitrary section refers to a section after the point in time when the changed audio quality in the corresponding content should originally be applied, and may include a silent section.

The arbitrary section is a section after the point in time at which the changed audio quality should have been originally applied in the corresponding content, and may include a section where the set volume is less than or equal to (or below) a threshold. The set volume may be any one of the current set volume of the display device, the volume level of the original audio, etc. The threshold may be determined based on a difference in volume level between the audio frame (to which the changed audio quality should have been applied) and the audio frame before or after, the absolute volume level of the target audio frame, etc.

In the present disclosure, the term "section" may also be used to mean a specific point in time.

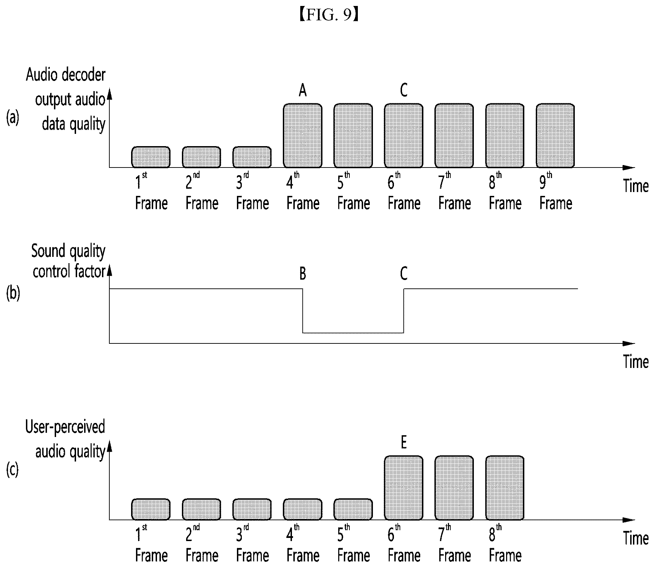

FIG. 9(a) is a diagram illustrating changes in the quality of audio data output from the audio decoder 710 of the display device 100 according to changes in data reception conditions. FIG. 9(b) is a diagram illustrating the sound quality control factor applied to FIG. 9(a). FIG. 9(c) is a diagram illustrating changes in user-perceived audio quality according to application of the sound quality control factor of FIG. 9(b).

In the graph illustrated in FIG. 9 (a), the vertical axis may represent, for example, the original audio quality of the audio frame decoded and output by the audio decoder 710.

Referring to FIG. 9(a), as the data reception conditions improve, from point A, i.e., the 4th frame, the display device 100 can output higher-quality audio compared to previous frames.

The display device 100 can delay the application of the changed sound quality so that the audio with the changed sound quality is applied from the 6th frame, as illustrated in FIG. 9(c).

To this end, the display device 100 can detect the aforementioned silent section or a section with a volume level below the threshold. In FIG. 9(b), the sound quality control factor can be adjusted in the 4th frame of FIG. 9 so that the changed sound quality is applied from the detected section, and then restored to its original state in the 6th frame. By doing so, the user can perceive that the changed sound quality has been applied from the 6th frame.

Unlike the B-C section of FIG. 9(b), the sound quality control factor can be controlled linearly, nonlinearly, or stepwise in the B-C section.

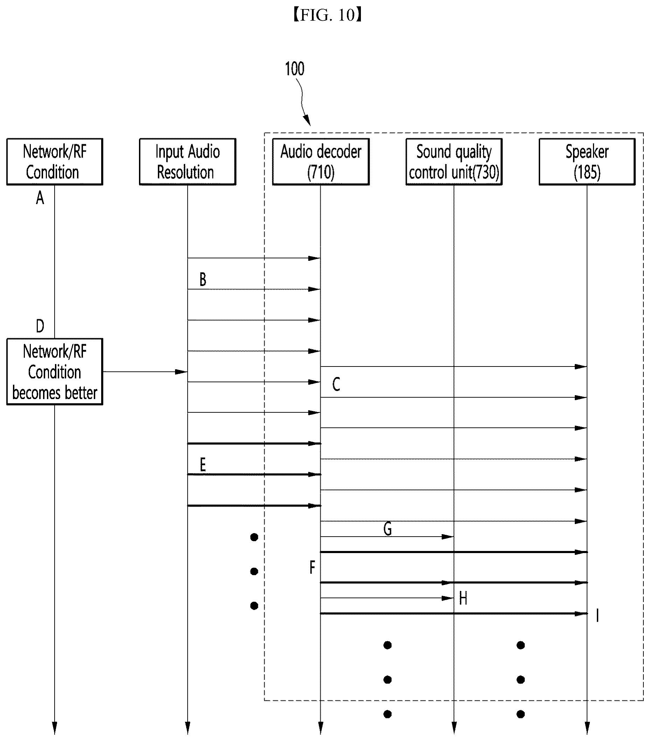

FIG. 10 is an operational sequence diagram of the display device 100 of FIG. 9.

FIG. 10 illustrates a case where the data reception conditions (or data reception status), i.e., the network/RF signal status, improves from a poor state (A) to a good state (D).

At B, the network/RF signal status remains poor (i.e., unchanged from A), so the display device 100 receives a low-quality audio signal. The audio decoder 710 decodes the low-quality audio signal and outputs the low-quality audio through the speaker 185 (C).

Thereafter, when the network/RF signal status improves (D), the display device 100 can receive a higher-quality audio signal than before (E).

The audio decoder 710 decodes the high-quality audio signal and transmits the decoded audio signal to the speaker 185 (F).

However, in the present disclosure, before transmitting the higher quality audio, compared to before, decoded by the audio decoder 710 to the speaker 185, the timing of application of the changed sound quality can be delayed by controlling the sound quality control factor (G).

The display device 100 can delay the change in sound quality by controlling an audio quality-related factor, the sound quality control factor, such as H, in the silent section that arrives at the G standard.

Therefore, the user can perceive the changed sound quality in I. However, since I is a silent section, it is difficult for the user to perceive the change (i.e., improvement) in sound quality. Afterwards, audio with the changed, i.e., improved, sound quality is continuously output, allowing the user to naturally accept the change in sound quality.

Meanwhile, in FIG. 10, a problem may arise if a silent period does not exist or arrives after a predetermined period, after G. Therefore, the display device 100 can set a timeout period while waiting for the silent period. If the display device 100 does not detect a silent period within the timeout period, it can select an arbitrary audio frame and apply the changed audio quality.

The timeout period may be determined, for example, by the buffer size. The timeout period may be determined by a multiple of the buffer size.

While FIGS. 8 to 10 above use the silent section as an example, the present invention is not limited thereto. For example, a section with a volume size below a threshold may be used instead of a silent section.

Meanwhile, while the aforementioned FIGS. 8 to 10 describe delaying the timing of an application for quality changes from low to high quality, the timing of an application for quality changes may be pushed forward rather than delayed, referring to the aforementioned principles.

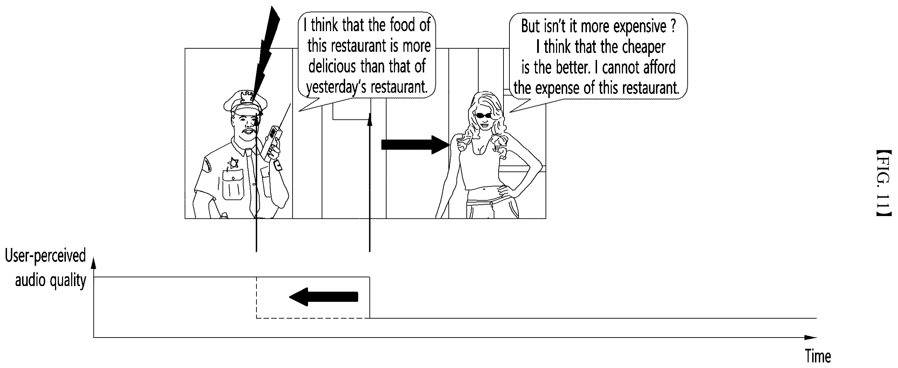

FIGS. 11 to 13 are diagrams illustrating the operation of the display device 100 according to another embodiment of the present disclosure.

FIGS. 11 to 13 illustrate a content processing method according to the present disclosure, for example, when data reception conditions deteriorate after a certain point in time.

Referring to FIG. 11, the display device 100 can control the timing of application so that the changed audio quality is applied in an arbitrary section by advancing the timing of application, rather than in the section where the changed audio quality should have been originally applied due to a change in the data reception status, based on the user's perception of the audio quality.

Here, the "arbitrary section" refers to a section in time before the changed audio quality in the corresponding content is originally to be applied, and may include a silent section.

The "arbitrary section" refers to a section in time before the changed audio quality in the corresponding content is originally to be applied, and may include a section in time when the set volume is less than or equal to (or below) a threshold. The set volume may be any one of the current set volume of the display device, the volume of the original audio, etc. The threshold may be determined based on the difference in volume between the audio frame (to which the changed audio quality should have been applied) and the audio frame before or after the audio frame, the absolute volume of the target audio frame, etc.

In the present disclosure, the term "section" may also be used to mean a specific point in time.

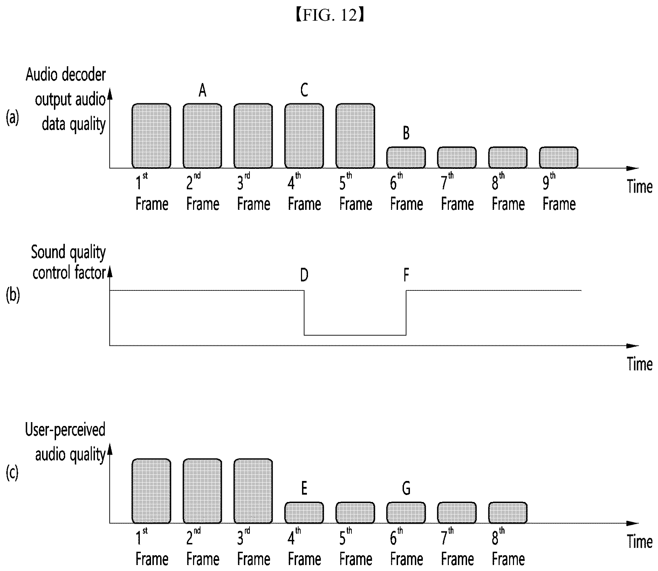

FIG. 12(a) is a diagram illustrating changes in the quality of audio data output from the audio decoder 710 of the display device 100 according to changes in data reception conditions. FIG. 12(b) is a diagram illustrating the sound quality control factor applied to FIG. 12(a). FIG. 12(c) is a diagram illustrating changes in user-perceived audio quality according to the sound quality control factor applied to FIG. 12(b).

In the graph illustrated in FIG. 12(a), the vertical axis may represent, for example, the original audio quality of the audio frame decoded and output by the audio decoder 710.

Referring to FIG. 12(a), if the data reception conditions deteriorate, from point B, i.e., the 6th frame, the display device 100 may output lower-quality audio compared to previous frames.

The display device 100 can control the application of the changed sound quality so that the audio with the changed sound quality is applied in advance from the 4th frame (E), as illustrated in FIG. 12(c).

To this end, the display device 100 can detect the aforementioned silent section or a section with a volume level below a threshold. In FIG. 12(b), the sound quality control factor (D) can be adjusted in the 4th frame (E) of FIG. 12 so that the changed sound quality is applied from the detected section, and then restored to its original state in the 6th frame (F). This allows the user to perceive that the changed sound quality has already been applied from the 4th frame.

Unlike the D-F section of FIG. 12(b), the sound quality control factor can be controlled linearly, nonlinearly, or stepwise between the D-F section.

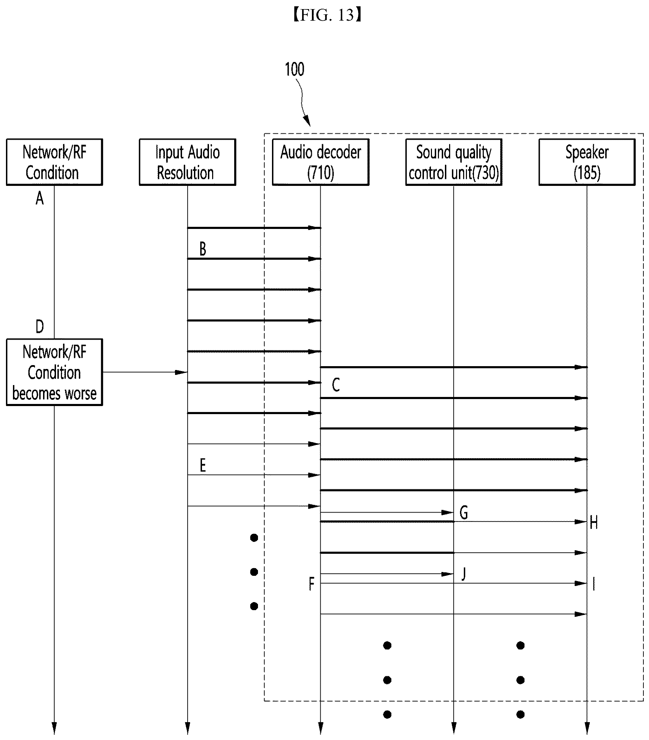

FIG. 13 is an operation sequence diagram of the display device 100 of FIG. 12.

FIG. 13 illustrates a case where the data reception status, i.e., the network/RF signal status, improves from a good state (A) to a bad state (D).

At B, since the network/RF signal status is still good (i.e., unchanged from A), the display device 100 receives a high-quality audio signal. The audio decoder 710 decodes the high-quality audio signal and outputs the high-quality audio through the speaker 185 (C).

Subsequently, if the network/RF signal status improves (D), the display device 100 may receive a lower-quality audio signal compared to before (E). The audio decoder 710 decodes the low-quality audio signal and transmits it to the speaker 185.

The audio decoder 710 can calculate a future point in time (F) at which the voice data with the changed quality must be transmitted to the speaker 185 (E).

During the period between E and F, the first silent section can be detected, and the sound quality can be controlled to degrade at this time using a sound quality control factor (G).

From the user's perspective, for example, sound quality may degrade at H. However, since this moment is a silent section anyway, the viewer will have difficulty noticing this sound quality improvement, and the likelihood of this sound quality improvement being perceived as unnatural is also reduced.

The audio decoder 710 can begin transmitting the decoded audio data with the changed quality at time I to the speaker 185.

At this time, by restoring voice quality-related factors, such as J, to their original values, control can be made to prevent any change in sound quality from the user's perspective. In other words, the change from high-quality to low-quality can be offset by the change from low-quality settings to high-quality settings. Therefore, the user may perceive no change in sound quality.

While FIGS. 11 to 13 above use silent sections as examples, this is not a limitation. For example, a section with a volume level below a threshold can be used instead of the silent section.

Meanwhile, while the aforementioned FIGS. 11 to 13 describe advancing the timing of the application for a quality change from high to low quality, the aforementioned principles can also be used to delay, rather than advance, the timing of the quality change.

If there are multiple silent sections (or sections with a volume level below a threshold), the display device 100 can select the silent section closest to the corresponding audio frame. If there are multiple silent sections (or sections with a volume level below a threshold), the display device 100 may select the silent section furthest from the corresponding audio frame.

If both a silent section and a section with a volume level below a threshold are detected, the display device 100 may select the silent section to apply the changed audio quality to that silent section.

If both a silent section and a section with a volume level below a threshold are detected, the display device 100 may select the section with a volume level below a threshold to apply the changed audio quality to that silent section.

If both a silent section and a section with a volume level below a threshold are detected, the display device 100 may select the section closer to the corresponding frame among the silent section and the section with a volume level below a threshold to apply the changed audio quality to that section.

If both a silent section and a section with a volume level below a threshold are detected, the display device 100 may compare the number of audio frames constituting the silent section with the number of audio frames constituting the section with a volume level below the threshold, and select a section with a larger number of audio frames to apply the changed audio quality.

If neither a silent section nor a section with a volume level below a threshold is detected within a timeout period, the display device 100 may select a section (or point in time) with the lowest volume level within the timeout period to apply the changed audio quality.

In addition, the control contents regarding audio quality in the present disclosure may be applied or applied mutatis mutandis to a combination of the aforementioned frame units and scene changes.

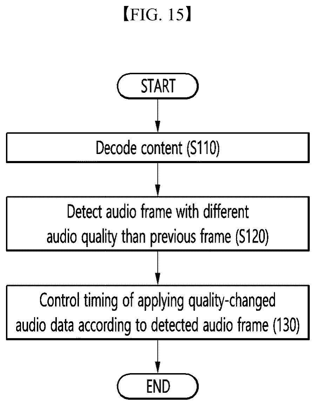

FIG. 15 is a flowchart illustrating an operation method of the display device 100 according to an embodiment of the present disclosure.

Referring to FIG. 15, the operation method of the display device 100 (or the processor 700) will be described.

At step S110, the display device 100 may decode content.

Here, the content may be obtained through media such as terrestrial, satellite, cable, or IP. The content may be OTT (Over the Top) content. The content may also be streaming content.

At step S120, the display device 100 may detect an audio frame having a different audio quality from the previous frame among the audio frames within the decoded content.

At step S130, the display device 100 can control the application timing of quality-changed audio data according to the detected audio frame.

Even if not specifically mentioned, the order of at least some of the operations disclosed in the present disclosure may be performed simultaneously or in a different order from the described order, or some may be omitted/added.

According to one embodiment of the present disclosure, the above-described method can be implemented as a code that can be read by a processor in a medium in which a program is recorded. Examples of the medium that can be read by a processor include a ROM, a RAM, a CD-ROM, a magnetic tape, a floppy disk, an optical data storage device, etc.

The display device described above is not limited to the configuration and method of the embodiments described above, and the embodiments may be configured by selectively combining all or some of the embodiments so that various modifications can be made.

### [Industrial Applicability]

The display device and its operating method according to the present disclosure control the change in the user's sound perception quality to be seamless or minimized even when QoS (Quality of Service) is applied to a change in the data reception environment, and thus can be applied to various industrial fields where sound quality control is required or applied, and thus has industrial applicability.

## Claims

1. A display device, comprising:
an audio decoder;
a display configured to output content; and
a processor configured to control the audio decoder,
wherein the processor is configured to:
detect a change in the quality of the audio data decoded by the audio decoder, and control a timing of application of a quality-changed audio data.

2. The display device according to claim 1, wherein the processor is configured to:
control the timing of application of the quality-changed audio data using a sound quality control factor.

3. The display device according to claim 2, wherein the processor is configured to:
control the timing of application of the quality-changed audio data in audio frame units.

4. The display device according to claim 2, wherein the processor is configured to:
control the timing of application of the quality-changed audio data in units of scene changes of the content.

5. The display device according to claim 2, wherein the sound quality control factor includes at least one of sampling rate information, data bit number information, and audio channel number information about audio data.

6. The display device according to claim 5, wherein the processor is configured to:
control the timing of application of the quality-changed audio data to be pulled forward or delayed using the sound quality control factor.

7. The display device according to claim 2, wherein the processor is configured to:
detect a silent section in an audio frame to be played before or after the quality-changed audio data, and
control the quality of the audio data to be changed in the detected silent section using the sound quality control factor.

8. The display device according to claim 2, wherein the processor is configured to:
detect a section in which a set volume level is less than or equal to a threshold in an audio frame to be played before or after the quality-changed audio data, and
control the quality of the audio data in the detected section in which the set volume level is less than or equal to the threshold level using the sound quality control factor.

9. The display device according to claim 7 or claim 8, wherein the processor is configured to:
control the quality of the audio data to be changed by selecting an arbitrary audio frame if the silent section is not detected within the number of audio frames determined by considering a buffer size.

10. The display device according to claim 5, wherein the processor is configured to:
control the timing of application of the quality-changed audio data by controlling audio data corresponding to the Least Significant Bits (LSB) of the audio data using the data bit number information.

11. The display device according to claim 5, wherein the processor is configured to:
control the timing of application of the quality-changed audio data by controlling an additional audio channel other than a basic audio channel of the audio data using the audio channel number information.

12. The display device according to claim 5, wherein the processor is configured to:
control the timing of application of the quality-changed audio data by resampling the number of audio samples to be output per second using the sampling rate information.

13. An operation method of a display device, comprising:
decoding content;
detecting audio frames having audio quality different from audio quality of previous frames among audio frames within the decoded content; and
controlling a timing of application of quality-changed audio data according to the detected audio frame.
